# EUROPÄISCHE PATENTSCHRIFT

(11) **EP 0 937 206 B1**
(45) Veröffentlichungstag und Bekanntmachung des Hinweises auf die Patenterteilung: **20.06.2001**
(21) Anmeldenummer: 97951167.2
(22) Anmeldetag: 11.11.1997
(51) Int. Cl.: F15B 15/20, B62D 5/12, B62D 5/06

(54) **PNEUMATISCHER ODER HYDRAULISCHER STELLMOTOR MIT EINER ABSCHALTEINRICHTUNG**
PNEUMATIC OR HYDRAULIC CONTROL MOTOR WITH A SHUTOFF DEVICE
MOTEUR DE POSITIONNEMENT PNEUMATIQUE OU HYDRAULIQUE MUNI D'UN DISPOSITIF DE DESENCLENCHEMENT

(30) Priorität: 16.11.1996 DE 19647472
(43) Veröffentlichungstag der Anmeldung: 25.08.1999
(73) Patentinhaber: ZF FRIEDRICHSHAFEN Aktiengesellschaft, 88038 Friedrichshafen (DE)
(72) Erfinder: HAFERMALZ, Jens-Uwe, D-73525 Schwäbisch Gmünd (DE)
(74) Vertreter: Wiechmann, Manfred
(86) Internationale Anmeldenummer: EP9706270
(87) Internationale Veröffentlichungsnummer: WO9822718

(56) Entgegenhaltungen:
- FR-A- 1 125 999
- US-A- 2 735 502
- US-A- 4 860 646

## Beschreibung

Die Erfindung betrifft einen pneumatischen oder hydraulischen Stellmotor, in welchem eine Abschalteinrichtung in den Endlagen eines Arbeitskolbens vorgesehen ist. In der vorliegenden Ausführung betrifft die Erfindung eine Hilfskraftlenkvorrichtung, insbesondere für Kraftfahrzeuge mit einer Druckölpumpe, einem Lenkventil und einem Servomotor.

Derartige Abschalteinrichtungen sollen das harte Anlaufen des Arbeitskolbens gegen die Endanschläge verhindern, weil damit Geräusche verbunden sind. Beim Anlaufen des Arbeitskolbens an die Endanschläge steigt der Pumpendruck in unzulässiger Weise auf einen Höchstwert an, so daß das eingebaute Überdruckventil anspricht. Wenn das Lenkventil in diesem Betriebszustand längere Zeit ausgelenkt bleibt, kann dabei die Pumpe durch thermische Überlastung Schaden nehmen.

Eine Abschalteinrichtung für eine Hilfskraftlenkung ist z. B. aus der DE 42 21 459 A1 bekannt. Hier wird in einer Endlage des unter Hochdruck stehenden Arbeitskolbens der beaufschlagte Druckraum mit dem unter Rücklaufdruck stehenden Druckraum verbunden. Das Drucköl kann sich daher über den Druckanschluß der inaktiven Druckseite entspannen und abfließen. Dieser Entlastungsweg in den Endlagen des Servomotors erfolgt über eine Längsnut in der Innenwandung des Servozylinders, die mit dem Druckanschluß in Verbindung kommt. Diese Verbindung in den Endlagen stellt man durch Überfahren der Längsnut durch den Arbeitskolben her. Eine solche Abschalteinrichtung kann beim Zurücklenken in die andere Lenkrichtung aber zunächst noch keinen Druck aufbauen, da der Arbeitskolben zuerst eine kurze Wegstrecke zurücklegen muß, um die Längsnut zu schließen. Während dieser Zeit steht keine Servokraft zur Verfügung und der Fahrer muß die gesamte Lenkkraft von Hand aufbringen.

Aus der FR-A-1 125 999 ist ein anderer Stellmotor mit einer Abschalteinrichtung für einen Arbeitskolben bekannt, bei dem in den Arbeitskolben eine bewegbare Kugel-Feder-Einheit eingesetzt ist. Dabei dichtet jeweils eine Kugel einen Umgehungskanal zu dem jeweils entlasteten Druckraum an einer Dichtkante des Arbeitskolbens ab. Durch Anschlag an eine vorspringende Kante in den beiden Endstellungen des Servozylinders wird jeweils eine Kugel von der zugehörigen Dichtkante weggedrückt, so daß beide Druckräume in Verbindung treten. Bei dieser Anordnung kann jedoch nur ein Umgehungskanal mit einem sehr kleinen Strömungsquerschnitt geöffnet werden. Ein weiterer Stellmotor mit einer Abschalteinrichtung ist aus der US-A-4,860,646 bekannt, bei der in dem Arbeitskolben ein nach beiden Seiten vorstehender kleiner Steuerkolben angeordnet ist, durch den beim Auflaufen des Arbeitskolbens an die Zylinderendwand ein relativ enger Umgehungskanal geöffnet wird.

Die Aufgabe der Erfindung besteht darin, die Abschalteinrichtung so abzustimmen, daß schon zu Beginn des Zurücklenkens aus einer Endstellung die Servokraft zur Verfügung steht. Zur Vermeidung von Geräuschen soll ein großer Durchflußquerschnitt des Umgehungskanals geöffnet werden. Die Hilfskraftlenkvorrichtung soll die Forderung mit möglichst geringem Bauaufwand erfüllen.

Diese Aufgabe wird durch die im Anspruch 1 gekennzeichnete Hilfskraftlenkvorrichtung dadurch gelöst, daß auf dem Arbeitskolben mindestens ein begrenzt wegverschiebbarer Loskolben angeordnet ist, der mit seinen Stirnseiten einen Umgehungskanal zum jeweils entlasteten Druckraum des Servomotors abdichtet. In den beiden Endstellungen des Servozylinders befindet sich außerdem eine Buchse mit einem abgesetzten Bund, der den verschiebbaren Loskolben von seiner einen Dichtkante abdrückt, während die andere Dichtkante geöffnet ist, so daß beide Druckräume miteinander Verbindung erhalten. Der Loskolben ist ringförmig ausgebildet und kann dadurch einen relativ großen ringförmigen Durchflußquerschnitt öffnen. Wenn beim Zurücklenken in den vorher entlasteten Druckraum der Betriebsdruck einströmt, bewegt sich der Loskolben zur anderen Dichtkante und dichtet den neuen Druckraum ab, wobei über eine Steuerkante der Ölstrom geregelt werden kann. Auf diese Weise läßt sich aus den Endstellungen mit hydraulischer Unterstützung wieder zurücklenken. Die regelnden Steuerkanten haben hierbei die Aufgabe, für einen weichen Anlauf des Loskolbens an die Dichtkanten zu sorgen. Ist ein weicher Anlauf nicht erforderlich, können die Steuerkanten entfallen.

Eine vorteilhafte Ausführungsform mit zwei Loskolben ist im Anspruch 2 angegeben. Hier befindet sich ein weiterer Loskolben mit begrenzter Wegverschieblichkeit auf dem Arbeitskolben, wobei jeder Loskolben mit seiner außenliegenden Stirnseite den Umgehungskanal abdichtet. Zwischen den Loskolben ist in einem druckbeaufschlagbaren Raum eine Feder eingesetzt. Diese Ausführung zeichnet sich dadurch aus, daß sich von der Abschalteinrichtung ausgehende Geräusche vermeiden lassen. Die weiteren Ansprüche 3 bis 6 beziehen sich auf zweckmäßige Ausgestaltungen der Erfindung.

Die Erfindung ist z. B. anhand einer hydraulischen Hilfskraftlenkung an zwei Ausführungsbeispielen näher erläutert.
Es zeigen:

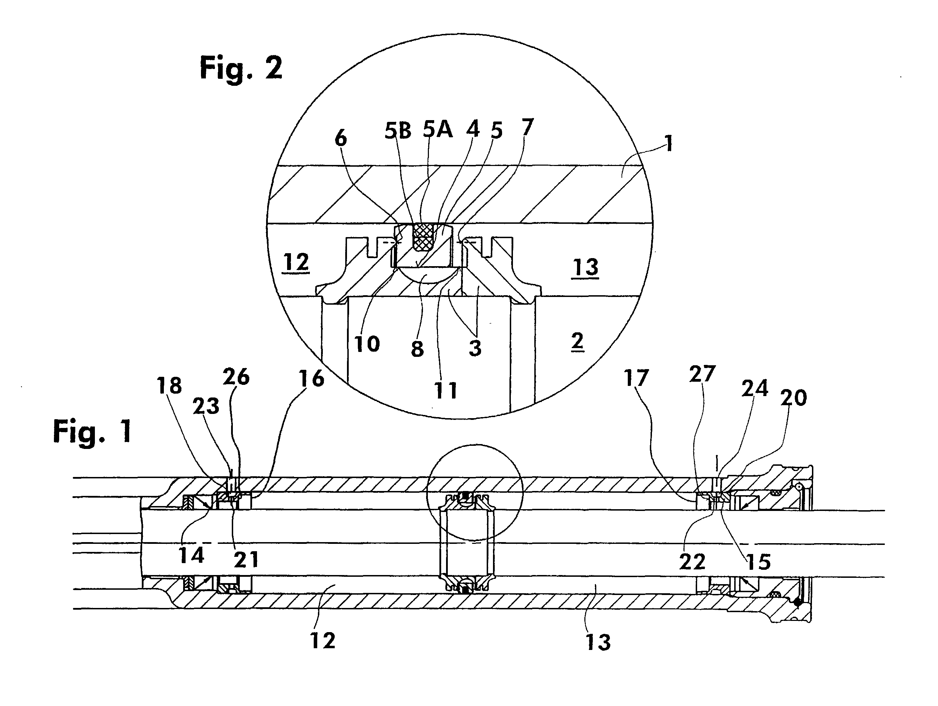

- Fig. 1: den Servozylinder einer Hilfskraftlenkvorrichtung im Schnitt mit der erfindungsgemäßen Abschaltvorrichtung;
- Fig. 2: einen vergrößerten Ausschnitt des Arbeitskolbens nach Fig. 1;
- Fig. 3: eine weitere Ausführungsform mit zwei Loskolben;
- Fig. 4: einen vergrößerten Ausschnitt des Arbeitskolbens nach Fig. 3 und
- Fig. 5: einen vergrößerten Ausschnitt einer Ausführungsform eines Endanschlags.

In einem Zylinderrohr 1 ist ein auf einer Kolbenstange 2 fester Arbeitskolben 3 gelagert. An die Kolbenstange 2 schließt sich eine nicht dargestellte Zahnstange fluchtend an. Den Arbeitskolben 3 befestigt man durch Rollieren oder Kneten formschlüssig auf der Kolbenstange 2. Der geteilte Arbeitskolben 3 enthält eine Nut 4, in der ein Loskolben 5 mit Dichtringen 5A, 5B axial verschieblich eingesetzt ist. Der Arbeitskolben 3 dichtet mit Dichtkanten 6 oder 7 an einer der Stirnflächen des Loskolbens 5 einen Umgehungskanal 8 ab. Der Umgehungskanal 8 ist in Form einer oder mehrerer Längsnuten oder als Ringspalt im Arbeitskolben 3 oder im Loskolben 5 eingearbeitet. Der Loskolben 5 regelt dabei am Arbeitskolben 3 entweder mit einer Steuerkante 10 oder 11 den Ölstrom im Umgehungskanal 8.
Der Loskolben 5 und der Arbeitskolben 3 unterteilen das Zylinderrohr 1 in zwei Druckräume 12 und 13.

An den Enden des Zylinderrohres 1 sind jeweils eine Buchse 14 und 15 mit einem abgesetzten Bund 16 und 17 und einem Endanschlag 26, 27 eingebaut. Die Buchse 14, 15 hat außerdem die Aufgabe, über eine Ringnut 18, 20 und eine Bohrung 21, 22 eine Verbindung von dem Ölanschluß 23, 24 in den Druckraum 12 oder 13 herzustellen.

Wenn der Arbeitskolben 3 durch den Betriebsdruck z. B. im Druckraum 12 in Richtung der rechten Endlage gedrückt wird, befindet sich der Loskolben 5 in Abdichtstellung an der Dichtkante 7. Der Loskolben 5 überdeckt hierbei die Steuerkante 11, während die Steuerkante 10 geöffnet ist. Der Betriebsdruck im Druckraum 12 kann sich durch die geschlossene Dichtkante 7 nicht zum Druckraum 13 entspannen. Der Arbeitskolben 3 mit dem Loskolben 5 bewegt sich bis zur Buchse 15. Am Endanschlag stößt der Bund 17 der Buchse 15 gegen den Loskolben 5 und verschiebt diesen in eine Mittellage, in der die Dichtkante 7 und die Steuerkante 11 geöffnet werden. Diese Mittellage des Loskolbens 5 wird durch die Anlage des Arbeitskolbens 3 am Endanschlag 27 der Buchse 15 bestimmt. Der Betriebsdruck in dem Druckraum 12 entspannt sich daraufhin über den Druckraum 13 und über den Ölanschluß 24 zu einem nicht dargestellten Ölbehälter. Das an der Dichtkante 6 nahezu drucklos vorbeiströmende Rücklauföl hält den Loskolben 5 in der geöffneten Stellung am Bund 17.

Soll aus dieser rechten Endlage wieder zurückgelenkt werden, so verstellt man das Lenkventil mit der Drehung des Lenkhandrades in die Gegenrichtung. Darauf strömt der Betriebsdruck über den Ölanschluß 24 in den Druckraum 13 ein und der Loskolben 5 wird gegen die Dichtkante 6 gedrückt. Daraufhin bewegt sich der Arbeitskolben 3 zusammen mit dem Loskolben 5 nach links. Durch die zusätzlichen Steuerkanten 10 und 11 läßt sich die Schließbewegung des Loskolbens 5 steuern, damit sich dieser gedämpft an seinen Dichtkanten 6 oder 7 anlegt. Mit der erfindungsgemäßen Hilfskraftlenkung läßt sich nach Verschieben des Loskolbens 5 gegen die Dichtkante 6 oder 7 mit Servokraft aus den Endstellungen zurücklenken.

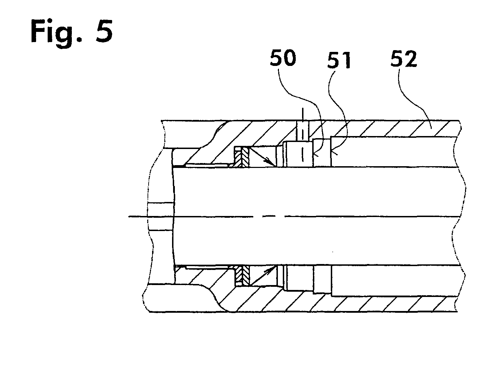

Nach Fig. 5 kann man den Endanschlag 50 und den Bund 51 auch unmittelbar in einem Zylinderrohr 52 anbringen. Die rechte Seite des Zylinderrohres muß jedoch als lose Buchse ausgeführt sein, damit sich der Arbeitskolben mit den Loskolben montieren läßt.

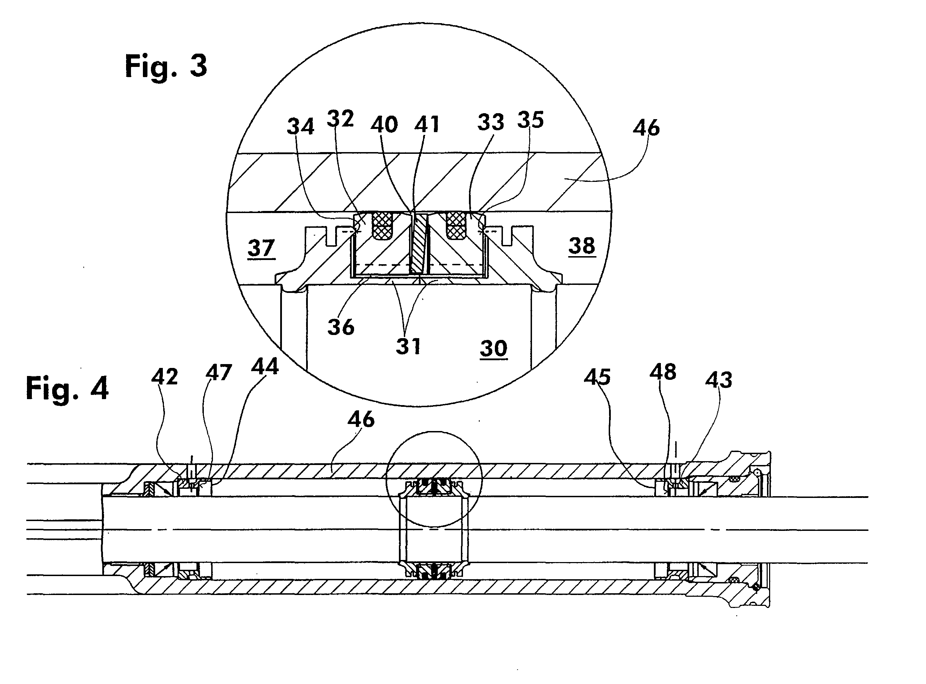

Aus den Fig. 3 und 4 geht eine weitere Ausführungsform der Erfindung hervor. Ein auf einer Kolbenstange 30 fester und zweiteiliger Arbeitskolben 31 trägt die Loskolben 32 und 33. Die Loskolben 32, 33 dichten mit den außenliegenden Stirnseiten gegen die Dichtkanten 34 und 35 ab. Ein Umgehungskanal 36 kann die Druckräume 37 und 38, je nach Stellung der Loskolben 32, 33, miteinander verbinden. Zwischen den beiden Loskolben 32 und 33 ist eine Kammer 40 gebildet, die eine Feder 41, vorzugsweise eine Tellerfeder, aufnimmt. Die Feder 41 drückt die Loskolben 32 und 33 auseinander und hält diese an den Dichtkanten 34 und 35 des Arbeitskolbens 31 in Anlage. In den Endstellungen sind als Anschläge wiederum Buchsen 42 und 43 mit abgesetzten Bunden 44 und 45 in das Zylinderrohr 46 eingepreßt.

Um in der Geradeausfahrtstellung keine Bewegung der Loskolben 32, 33 und damit Geräusche zu erhalten, stimmt man die Feder 41 auf den Betriebsdruck und auf die Stirnfläche der Bewegungskolben 32, 33 ab. Steigt der Druck in einem der Druckräume 37 oder 38 über diesen Betriebsdruck an, dann verschiebt sich der Loskolben 32 bzw. 33 gegen die Feder 41 und über die geöffnete Dichtkante 34 oder 35 baut sich in der Kammer 40 ein Druck auf. Dieser Druck in der Kammer 40 stellt mit der Feder 41 wieder ein Kräftegleichgewicht zum Druck in den Druckräumen 37 oder 38 her. Der Loskolben wird durch die Feder 41 und den in der Kammer 40 herrschenden Druck an die entsprechende Dichtkante 34 und 35 des Arbeitskolbens 31 angedrückt.

Der Arbeitskolben 31 bewegt sich zusammen mit den Loskolben 32, 33 z. B. durch den Betriebsdruck im Druckraum 37 nach rechts. Beim Anlaufen des Arbeitskolbens 31 an den Endanschlag 48 der Buchse 43 ist der Loskolben 33 durch den Bund 45 verschoben und die Dichtkante 35 geöffnet. Der Druck in der Kammer 40 tritt dadurch mit dem Rücklaufdruck des Druckraums 38 in Verbindung und entspannt sich zu einem Ölbehälter. Durch den Betriebsdruck im Druckraum 37 verschiebt sich der Loskolben 32 gegen die Feder 41 und den Rücklaufdruck in der Kammer 40 und öffnet die Dichtkante 34. Beide Loskolben 32 und 33 haben ihre Dichtkanten 34 und 35 geöffnet und zwischen den Druckräumen 37 und 38 besteht über den Umgehungskanal 36 Kurzschluß. Das von einer Pumpe geförderte Öl kann zu einem Behälter abströmen. Der Druck im Druckraum 37 stellt sich je nach der Dimensionierung der Feder 41 ein. Der Arbeitskolben 31 mit den Loskolben 32, 33 wird durch diesen Druck in der Endlage gehalten, der unterhalb seines Höchstwertes liegt.

Aus dieser Endlage läßt sich mit hydraulischer Unterstützung wieder herauslenken. Wenn man in den bis dahin entlasteten Druckraum 38 Betriebsdruck einsteuert, dichtet der Loskolben 32 den durch Rücklaufdruck beaufschlagten Druckraum 37 ab, der durch die Feder 41 gegen die Dichtkante 34 des Arbeitskolbens 31 gedrückt wird. Hat der Arbeitskolben 31 den Endanschlag 48 der Buchse 43 verlassen, stellt sich das weiter vorne beschriebene Kräfteverhältnis in der Kammer 40 wieder ein und der Loskolben 33 schließt die Dichtkante 35.

### Bezugszeichen

- 1: Zylinderrohr
- 2: Kolbenstange
- 3: Arbeitskolben
- 4: Nut
- 5: Loskolben
- 5A: Dichtring
- 5B: Dichtring
- 6: Dichtkante
- 7: Dichtkante
- 8: Umgehungskanal
- 9: -
- 10: Steuerkante
- 11: Steuerkante
- 12: Druckraum
- 13: Druckraum
- 14: Buchse
- 15: Buchse
- 16: abgesetzter Bund
- 17: abgesetzter Bund
- 18: Ringnut
- 19: -
- 20: Ringnut
- 21: Bohrung
- 22: Bohrung
- 23: Ölanschluß
- 24: Ölanschluß
- 25: -
- 26: Endanschlag
- 27: Endanschlag
- 28: -
- 29: -
- 30: Kolbenstange
- 31: Arbeitskolben
- 32: Loskolben
- 33: Loskolben
- 34: Dichtkante
- 35: Dichtkante
- 36: Umgehungskanal
- 37: Druckraum
- 38: -
- 39: -
- 40: Kammer
- 41: Feder
- 42: Buchse
- 43: Buchse
- 44: Bund
- 45: Bund
- 46: Zylinderrohr
- 47: Endanschlag
- 48: Endanschlag
- 49: -
- 50: Endanschlag
- 51: abgesetzter Bund
- 52: Zylinderrohr

## Patentansprüche

1. Stellmotor mit einem Servozylinder mit zwei durch einen Arbeitskolben (3) von einander getrennten Druckräumen (12 und 13) und mit einer Abschalteinrichtung für den Arbeitskolben (3), insbesondere für eine Hilfskraftlenkvorrichtung mit einer Druckölpumpe, einem Lenkventil und einem Servomotor, mit folgenden Merkmalen:
- Ein verschiebbares Teil dichtet einen Umgehungskanal (8) zum jeweils entlasteten Druckraum (12 oder 13) an einer Dichtkante des Arbeitskolbens (3) ab;
- in den beiden Endstellungen des Servozylinders befindet sich eine Buchse (14 und 15), die das verschiebbare Teil von einer Dichtkante (6 oder 7) abdrückt, so daß beide Druckräume (12 und 13) miteinander in Verbindung treten,
**gekennzeichnet** durch folgende Merkmale:
- auf dem Arbeitskolben (3) befindet sich als verschiebbares Teil mindestens ein ringförmiger Loskolben (5), der um einen begrenzten Weg verschiebbar ist;
- der verschiebbare Loskolben (5) dichtet mit seinen Stirnseiten den Umgehungskanal (8) zum jeweils entlasteten Druckraum (12 oder 13) an einer Dichtkante (6 und 7) des Arbeitskolbens (3) ab.

2. Stellmotor mit einer Abschalteinrichtung nach Anspruch 1, **gekennzeichnet** durch folgende Merkmale:
- auf dem Arbeitskolben (31) befindet sich ein weiterer Loskolben (32 und 33) mit begrenzter Wegverschieblichkeit;
- jeder Loskolben (32 und 33) dichtet mit seiner außenliegenden Stirnseite den Umgehungskanal ab und
- zwischen den Loskolben (32 und 33) ist in einer druckbeaufschlagbaren Kammer (40) eine Feder (41) eingesetzt.

3. Stellmotor mit einer Abschalteinrichtung nach Anspruch 2, dadurch **gekennzeichnet**, daß zwischen die Loskolben (32 und 33) eine Tellerfeder eingesetzt ist.

4. Stellmotor mit einer Abschalteinrichtung nach den Ansprüchen 1 und 2, dadurch **gekennzeichnet**, daß der Umgehungskanal (8; 36) ringförmig ausgebildet ist und im Arbeitskolben (3; 31) liegt.

5. Stellmotor mit einer Abschalteinrichtung nach den Ansprüchen 1 oder 2, dadurch **gekennzeichnet,** daß in den Endstellungen als Anschlag eine Buchse (14, 15) mit einem abgesetzten Bund (16, 17) in den Servomotor eingesetzt ist und der Bund den anlaufenden Loskolben (5) aufstößt und die Buchse über eine Bohrung (21, 22) sowie eine Ringnut (18, 20) mit dem Ölanschluß (23, 24) verbunden ist.

6. Stellmotor mit einer Abschalteinrichtung nach Anspruch 1, dadurch **gekennzeichnet**, daß an dem Umgehungskanal (8) durch den Loskolben (5) gesteuerte Steuerkanten (10, 11) vorhanden sind, welche die Bewegung des Loskolbens (5) bis zur Dichtkante (6, 7) steuern und welche den Ölstrom bis zum Abdichten regeln.

## Claims

1. Actuator with a booster cylinder having two pressure spaces (12 and 13) separated from one another by a working piston (3) and having a cut-off device for the working piston (3), in particular for a power steering system with a pressure-oil pump, with a steering valve and with an actuator, having the following features:
- a displaceable part seals off a bypass duct (8) relative to the respectively relieved pressure space (12 or 13) at a sealing edge of the working piston (3);
- located in the two end positions of the booster cylinder is a bush (14 and 15) which presses the displaceable part away from a sealing edge (6 or 7), so that the two pressure spaces (12 and 13) are connected to one another,
characterized by the following features:
- at least one annular loose piston (5), which is displaceable over a limited distance, is located as a displaceable part on the working piston (3);
- the displaceable loose piston (5) seals off, with its end faces, the bypass duct (8) relative to the respectively relieved pressure space (12 or 13) at a sealing edge (6 and 7) of the working piston (3).

2. Actuator with a cut-off device according to Claim 1, characterized by the following features:
- located on the working piston (31) is a further loose piston (32 and 33) displaceable over a limited distance;
- each loose piston (32 and 33) seals off, with its outer end face, the bypass duct, and
- a spring (41) is inserted in a pressure-loadable chamber (40) between the loose pistons (32 and 33).

3. Actuator with a cut-off device according to Claim 2, characterized in that a cup spring is inserted between the loose pistons (32 and 33).

4. Actuator with a cut-off device according to Claims 1 and 2, characterized in that the bypass duct (8; 36) is of annular design and lies in the working piston (3; 31).

5. Actuator with a cut-off device according to Claims 1 or 2, characterized in that a bush (14, 15) with an offset collar (16, 17) is inserted as a stop into the actuator in the end positions, the collar butts onto the oncoming loose piston (5), and the bush is connected to the oil connection (23, 24) via a bore (21, 22) and an annular groove (18, 20).

6. Actuator with a cut-off device according to Claim 1, characterized in that at the bypass duct (8) there are control edges (10, 11) which are controlled by the loose piston (5) and which control the movement of the loose piston (5) as far as the sealing edge (6, 7) and regulate the oil stream up to sealing-off.

## Revendications

1. Moteur de commande comprenant un servo-cylindre avec deux chambres sous pression (12 et 13) séparées l'une de l'autre par un piston de travail (3) et avec un dispositif de désenclenchement pour le piston de travail (3), en particulier pour un dispositif de direction assistée avec une pompe de refoulement d'huile, une soupape de braquage et un servomoteur, ayant les caractéristiques suivantes :
- une partie déplaçable ferme de manière étanche un canal de dérivation (8) vers la chambre sous pression déchargée respective (12 ou 13) au niveau d'une arête d'étanchéité du piston de travail (3) ;
- dans les deux positions extrêmes du servo-cylindre, se trouve une douille (14 et 15), qui repousse la partie déplaçable d'une arête d'étanchéité (6 ou 7), de sorte que les deux chambres sous pression (12 et 13) communiquent l'une avec l'autre,
caractérisé par les caractéristiques suivantes :
- sur le piston de travail (3) se trouve, en tant que partie déplaçable, au moins un piston fou annulaire (5) qui est déplaçable sur une course limitée ;
- le piston fou déplaçable (5) ferme de manière étanche, avec ses faces frontales, le canal de dérivation (8) vers chaque chambre sous presion déchargée (12 ou 13) au niveau d'une arête d'étanchéité (6 et 7) du piston de travail (3).

2. Moteur de commande comprenant un dispositif de désenclenchement selon la revendication 1, caractérisé par les caractéristiques suivantes :
- sur le piston de travail (31) se trouve un autre piston fou (32 et 33) de capacité de déplacement limitée ;
- chaque piston fou (32 et 33) ferme de manière étanche avec sa face frontale extérieure le canal de dérivation et
- entre les pistons fous (32 et 33) est inséré un ressort (41) dans une chambre (40) pouvant être sollicitée en pression.

3. Moteur de commande comprenant un dispositif de désenclenchement selon la revendication 2, caractérisé en ce qu'entre les pistons fous (32 et 33) est inséré un ressort Belleville.

4. Moteur de commande comprenant un dispositif de désenclenchement selon les revendications 1 et 2,
caractérisé en ce que le canal de dérivation (8; 36) a une forme annulaire et se trouve dans le piston de travail (3; 31).

5. Moteur de commande comprenant un dispositif de désenclenchement selon les revendications 1 ou 2,
caractérisé en ce que dans les positions extrêmes, une douille (14, 15) servant de butée est insérée dans le servomoteur avec un épaulement étagé (16, 17), et l'épaulement repousse le piston fou entrant (5) et la douille est connectée par l'intermédiaire d'un alésage (21, 22) ainsi que d'une rainure annulaire (18, 20) avec le raccord d'huile (23, 24).

6. Moteur de commande comprenant un dispositif de désenclenchement selon la revendication 1, caractérisé en ce que des arêtes de commande (10, 11) commandées par le piston fou (5) sont prévues sur le canal de dérivation (8), lesquelles commandent le mouvement du piston fou (5) jusqu'à l'arête d'étanchéité (6, 7) et régulent le flux d'huile jusqu'à l'étanchéité.
